(19) Europäisches Patentamt
European Patent Office
Office européen des brevets

(11) **EP 4 518 454 A1**

(12) **EUROPEAN PATENT APPLICATION**
published in accordance with Art. 153(4) EPC

(43) Date of publication:
**05.03.2025 Bulletin 2025/10**

(21) Application number: **23825782.8**

(22) Date of filing: **13.02.2023**

(51) International Patent Classification (IPC):
*H04W 52/02* (2009.01)   *H04M 1/73* (2006.01)

(52) Cooperative Patent Classification (CPC):
**H04M 1/73; H04W 52/02**

(86) International application number:
**PCT/CN2023/075722**

(87) International publication number:
**WO 2023/246123 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022  CN 202210719116**

(71) Applicant: **ZTE Corporation**
**Shenzhen, Guangdong 518057 (CN)**

(72) Inventor: **HAN, Shiwei**
**Shenzhen, Guangdong 518057 (CN)**

(74) Representative: **Chimini, Francesco et al**
**Jacobacci & Partners S.p.A.**
**Piazza della Vittoria 11**
**25122 Brescia (IT)**

(54) **WEARABLE DEVICE CONTROL METHOD, DEVICE, AND STORAGE MEDIUM**

(57)     Embodiments of the present invention provide a method for controlling a wearable device, the wearable device, and a storage medium, and belong to the field of wearable devices. The method includes: when a connecting band is determined to be separated from a main body portion, a signaling signal sent by the main body portion is acquired, and according to the signaling signal, it is determined whether the connecting band enters a power saving mode; and under the condition of the connecting band is determined to enter the power saving mode, a communication module of the connecting band is controlled to be opened at a preset time interval, so that the connecting band communicates with the main body portion at the preset time interval.

S101
when the connecting band is determined to be separated from the main body portion, a signaling signal sent by the main body portion is acquired, and whether the connecting band enters a power saving mode is determined according to the signaling signal

S102
Under the condition of the connecting band is determined to enter the power saving mode, a communication module of the connecting band is controlled to be opened at a preset time interval, so that the connecting band communicates with the main body portion at the preset time interval

Fig. 3

EP 4 518 454 A1

## Description

## Technical Field

Embodiments of the present invention relate to the technical field of wearable devices, in particular to a wearable device controlmethod anda device, and a storage medium.

## Background

With the continuous development of wearable devices (smart watches, smart bracelets, etc.), separable wearable devices that can continuously monitor the body health of users for 24 hours have entered the field of vision of users. A separable wearable device includes a watch face and a watch band. The watch band is used for monitoring physical sign data of a user and transmitting the physical sign data to the watch face. The watch face is used for processing the physical sign data monitored by the watch band and interacting with various applications and the user. At present, in the charging process of the watch face of the separable wearable device, the power consumption of the watch band is serious, so the watch band cannot continuously monitor the body of the user when the watch face is charged, resulting in poor user experience. Therefore, how to control the separable wearable device reasonably to reduce the power consumption of the watch band is an urgent problem to be solved.

## SUMMARY

Embodiments of the present invention provide a wearable devicecontrol method and device, and a storage medium, aiming at reducing the power consumption of the wearable device and improving the endurance of the wearable device to continuously monitor physical sign data.

The embodiments of the present invention provide a wearable device control method. The wearable device includes a main body portion and a connecting band. The method is applied to the connecting band, and includes: when the connecting band is determined to be separated from the main body portion, a signaling signal sent by the main body portion is acquired, and it is determined whether the connecting band enters a power saving mode according to the signaling signal; and under the condition of the connecting band is determined to enter the power saving mode, a communication module of the connecting band controlled to be opened at a preset time interval, so that the connecting band communicates with the main body portion at the preset time interval.

The embodiments of the present invention further provide a wearable device. The wearable device includes a main body portion, a connecting band, a processor, a memory, a computer program stored on the memory and executable by the processor, and a data bus used to realize connection communication between the processor and the memory. The computer program is configured to cause, when executed by the processor, the processor to perform steps of any method for controlling a wearable device as provided in the specification of the present invention.

The embodiments of the present invention further provide a storage medium, located ata computerreadable storage. And one or more programs are storedin the storage medium stores, and the one or more programs are configured to cause,when executed by one or more processors,the processor to perform steps of any wearable devicecontrol method as provided in the specification of the present invention.

## Brief Description of the Drawings

Fig. 1 is a schematic structural diagram of a wearable device according to an embodiment of the present invention.

Fig. 2 is another schematic structural diagram of a wearable device according to an embodiment of the present invention.

Fig. 3 is a schematic flowchart of a wearable device controlmethod according to an embodiment of the present invention.

Fig. 4 is another schematic flowchart of a wearable device controlmethod according to an embodiment of the present invention.

Fig. 5 is a schematic structural block diagram of a wearable device according to an embodiment of the present invention.

## Detailed Description of the Embodiments

The technical solutions in the embodiments of the present invention will be clearly and completely described below with reference to the accompanying drawings in the embodiments of the present invention. Apparently, the described embodiments are a part of the embodiments of the present invention, rather than all the embodiments. All other embodiments derived by a person of ordinary skill in the art from the embodiments of the present invention without any creative effort fall within the scope of protection of the present invention.

The flowcharts shown in the accompanying drawings are illustrative only and are not required to include all elements and operations/steps, nor are they required to be performed in the order depicted. For example, some of the operations/steps may also be decomposed, combined or partially merged, and thus the actual order of execution may change depending on the actual situation.

It is to be understood that the terms as used in the specification of the present invention are used merely for the purpose of describing particular embodiments and are not intended to limit the present invention. As used in the specification and the appended claims of the present invention, the singular forms "a", "one" and "the" are intended to include the plural form unless the context clearly indicates otherwise.

Embodiments of the present invention provide a wearable device control method and a device, and a storage medium. The wearable device control method may be applied to the wearable device, and the wearable device may be a smart watch, a smart bracelet, etc.

Some implementations of the present invention are described in detail below in conjunction with the accompanying drawings. The following embodiments and features in the embodiments may be combined with each other without conflict.

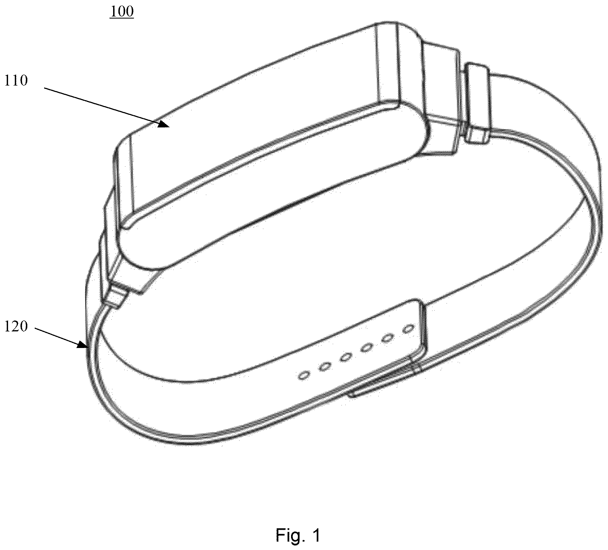

The embodiments of the present invention provide a wearable device control method. The wearable device control method is applied to the wearable device. Fig. 1 is a schematic structural diagram of a wearable device according to an embodiment of the present invention. As shown in Fig. 1, the wearable device 100 includes a main body portion 110 and a connecting band 120. The main body portion 110 is configured to interact with a user and various applications, and the main body portion 110 includes a cellular communication module, a display module, a communication module, a reverse charging module, a sensor module, and a battery module (none of which are shown in the figures). The cellular communication module is configured to interact with various applications. The display module is configured to display various collected physical sign data of a user and display various functions of the wearable device. The communication module is configured to communicate with the connecting band. The reverse charging module is configured to charge the connecting band 120, of course, the reverse charging module may also charge other electronic devices. The sensor module is configured to collect required measurement data. Sensors included in the sensor module may be set according to the actual situation, which is not specified in this embodiment, for example, the sensor module includes an acceleration sensor and a global positioning system. The battery module is configured to store electrical energy and is also configured to supply power to the main body portion as well as charge a battery module of the connecting band. The battery module may be selected according to the actual situation, which is specifically limited in this embodiment, for example, the battery module may be a 10V rechargeable battery.

The connecting band 120 includes a communication module, a sensor module, and a battery module. The communication module is configured to communicate with the main body portion 110. The sensor module is configured to collect various physical sign data of the user, the physical sign data including heart rate data, blood oxygen data, blood pressure data, etc. Sensors included in the sensor module may be set according to the actual situation, which is not specifically limited in this embodiment. For example, the sensor module includes an acceleration sensor, an optical heart rate sensor, a bioelectrical impedance sensor, a global positioning system, a galvanic response sensor, a temperature sensor, a capacitance sensor, an ambient light sensor, and a barometric pressure sensor. The battery module is configured to supply power to the entire connecting band.

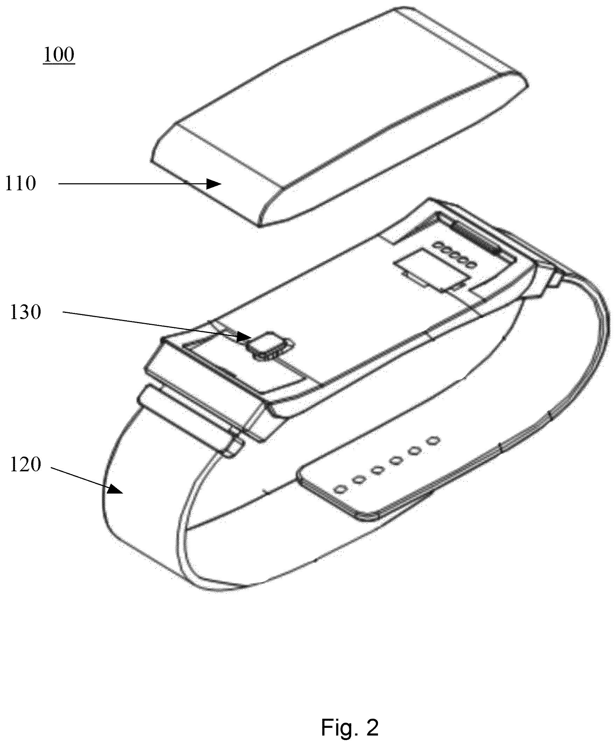

In an embodiment, referring to Fig. 2, which is another schematic structural diagram of the wearable device according to the embodiment of the present invention, the main body portion 110 and the connecting band 120 are detachably connected through a buckle 130. When power stored in the battery module of the main body portion 110 is insufficient, the main body portion 110 and the connecting band 120 may be separated by opening the buckle 130, and the main body portion 110 is independently connected to a charging apparatus to supplement power to the battery module of the main body portion 110. The charging apparatus may be selected according to the actual situation, which is not specifically limited in this embodiment, for example, the charging apparatus may be a charging base or a charging cable. The main body portion 130 and the connecting band 120 may communicate, and a communication manner may be selected according to the actual situation, which is not specifically limited in this embodiment, for example, the communication manner may be Bluetooth communication.

In an embodiment, the main body portion and the connecting band each include a processor. The processor may be a central processing unit (CPU), or other general-purpose processors, digital signal processors (DSPs), application specific integrated circuits (ASICs), field-programmable gate arrays (FPGAs) or other programmable logic devices, discrete gate or transistor logic devices, discrete hardware components, and so on. The general-purpose processor may be a microprocessor or the processor may also be any conventional processor, etc.

It is to be understood that the wearable device 100 in Figs. 1 and 2 and the above-described naming of the components of the wearable device are for identification purposes only, and do not thereby limit the embodiments of the present invention.

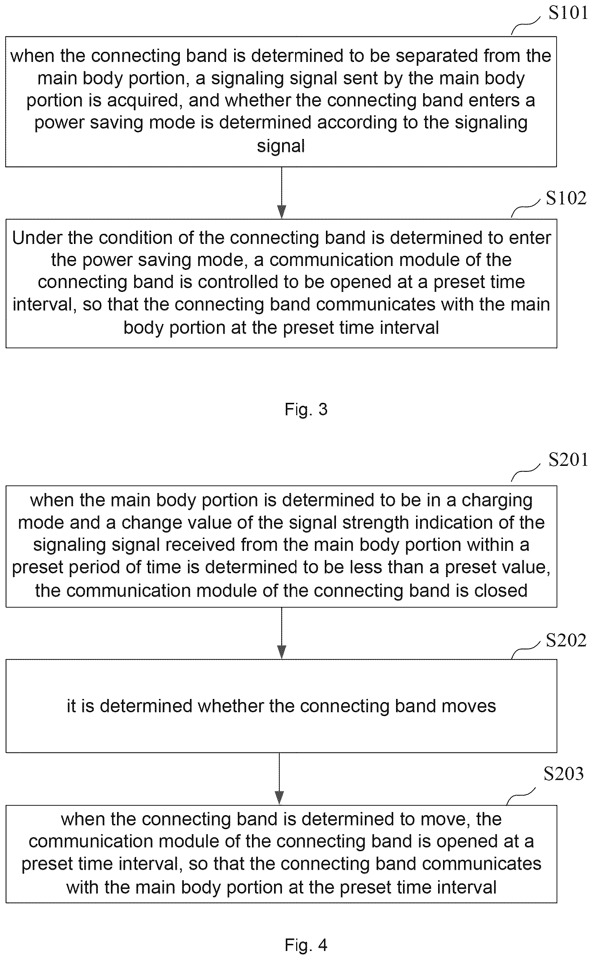

Fig. 3 is a schematic flowchart of a wearable device control method according to an embodiment of the present invention.

As shown in Fig. 3, the wearable device control method includes steps S101 and S102.

In step S101, when the connecting band is determined to be separated from the main body portion, a signaling signal sent by the main body portion is acquired, and whether the connecting band enters a power saving mode is determined according to the signaling signal.

The power saving mode is a mode for improving the endurance of the connecting band, and the power saving mode may be set according to the actual situation, which is not specifically limited in this embodiment, for example, closing the communication module of the connecting band.

In an embodiment, when the power of the battery module of the main body portion is determined to be insufficient, the main body portion is separated from the connecting band, and the main body portion is connected to the charging apparatus, so that the charging apparatus supplements power to the battery module of the main body portion. The signaling signal sent by the main body portion is acquired, and whether the connecting band enters the power saving mode is determined according to the signaling signal. By controlling the connecting band to enter the power saving mode, the endurance of the connecting band is improved, and accordingly the capability of the connecting band to continuously monitor the physical sign data of a user is improved.

In an embodiment, the manner of determining whether the connecting band enters the power saving mode according to the signaling signal may be as follows: the signaling signal includes a signal strength indication of the signaling signal, and whether the signal strength indication is greater than or equal to a preset signal strength is determined; and when the signal strength indication is greater than or equal to the preset signal strength, the connecting band is controlled to enter the power saving mode. The preset signal strength may be set according to the actual situation, which is not specifically limited in this embodiment. By determining whether the signal strength indication is greater than or equal to the preset signal strength, it is possible to accurately know whether the connecting band needs to enter the power saving mode, so as to achieve the purpose of power saving.

In an embodiment, when the signal strength indication of the signaling signal is less than the preset signal strength, a distance between the main body portion and the connecting band is determined to be large, the main body portion and the connecting band have a risk of loss, and the connecting band is controlled to issue an anti-loss warning. The anti-loss warning includes at least one of the following: a vibrating apparatus of the connecting band vibrates, a first signal light of the connecting band is displayed, and a speaker of the connecting band plays an alert tone. By controlling the connecting band to issue the anti-loss warning when the main body portion is far away from the connecting band, the main body portion and/or the connecting band may be effectively prevented from being lost, and the intelligence of the wearable device is greatly improved.

In step S102, under the condition of the connecting band is determined to enter the power saving mode, a communication module of the connecting band is controlled to be opened at a preset time interval, so that the connecting band communicates with the main body portion at the preset time interval.

The preset time interval may be set according to the actual situation, which is not specifically limited in this embodiment, for example, the time interval may be 10 minutes.

In an embodiment, when the connecting band is determined to enter the power saving mode, the communication module of the connecting band is controlled to be opened at the preset time interval, so that the connecting band receives the signaling signal sent by the main body portion at the preset time interval, and whether the connecting band exits the power saving mode is determined according to the signaling signal. When the connecting band is determined to enter the power saving mode, the communication module of the connecting band is controlled to be opened at the preset time to save power stored in the connecting band, thereby achieving the purpose of continuously monitoring the physical sign data of the user, and greatly improving the user experience of the wearable device.

In an embodiment, when the connecting band enters the power saving mode, the communication module of the connecting band is controlled to be opened at the preset time interval so as to acquire the signaling signal sent by the main body portion at the preset time interval, and when the signal strength indication of the signaling signal is less than the preset signal strength, the connecting band is controlled to issue the anti-loss warning. The anti-loss warning includes at least one of the following: a vibrating apparatus of the connecting band vibrates, a first signal light of the connecting band is displayed, and a speaker of the connecting band plays an alert tone. When the connecting band is in the power saving mode and the signal strength indication of the signaling signal is detected to be less than the preset signal strength, the distance between the connecting band and the main body portion is determined to be large, and the connecting band is controlled to issue the anti-loss warning, which can effectively prevent the main body portion and/or the connecting band from being lost, and greatly improve the intelligence of the wearable device.

In an embodiment, when the signal strength indication of the signaling signal received by the connecting band is determined to be less than the preset signal strength, the communication module of the connecting band is controlled to be continuously opened, so that the communication module of the connecting band continuously searches for the signaling signal sent by the main body portion. By continuously opening the communication module of the connecting band to make the communication module of the connecting band continuously search for the signaling signal sent by the main body portion, and then continuously determines that there is a risk of lossbetween the connecting band and the main body portion, which greatly improves the safety of the wearable device.

By means of the above embodiments of the present invention, when the connecting band is determined to be separated from the main body portion, the signaling signal sent by the main body portion is acquired, and whether the connecting band enters the power saving mode is determined according to the signaling signal; and when the connecting band is determined to enter the power saving mode, the communication module of the connecting band is controlled to be opened at the preset time interval, so that the connecting band communicates with the main body portion at the preset time interval. In this embodiment, when the connecting band is determined to enter the power saving mode, the communication module of the connecting band is controlled to be opened at the preset time interval to save the power stored in the connecting band, thereby achieving the purpose of continuously monitoring the physical sign data of the user, and greatly improving the user experience of the wearable device.

Fig. 4 is a schematic flowchart of a wearable device control method according to another embodiment of the present invention.

As shown in Fig. 4, the wearable device control method includes steps S201 to S203.

In step S201, when the main body portion is determined to be in a charging mode and a change value of the signal strength indication of the signaling signal received from the main body portion within a preset period of time is determined to be less than a preset value, the communication module of the connecting band is closed.

When the main body portion is determined to be in the charging mode, the signal strength indication of the signaling signal received from the main body portion each time within the preset period of time is acquired, and the change value of the signal strength indication of the signaling signal sent by the main body portion each time is calculated; when the change value of the signal strength indication is determined to be less than the preset value, the connecting band is determined to move by a small distance, and the communication module of the connecting band is closed. The preset period of time and the preset value may be set according to the actual situation, which are not specifically limited in this embodiment, for example, the preset period of time may be configured to 30 minutes, and the preset value may be configured to 10 dbm. When the change value of the signal strength indication of the signaling signal received from the main body portion within the preset period of time is determined to be less than the preset value, it is determined that a user does not move, and the communication module of the connecting band is closed to reduce the power consumption of the connecting band, which in turn greatly improves the endurance of the connecting band.

Exemplarily, the signal strength indication of the signaling signal received from the main body portion by the connecting band at 10:00 a.m. on June 10, 2022 is -60 dbm, the signal strength indication of the signaling signal received from the main body portion by the connecting band at 10:10 a.m. on June 10, 2022 is -63 dbm, the signal strength indication of the signaling signal received from the main body portion by the connecting band at 10:20 a.m. on June 10, 2022 is -58 dbm, and the signal strength indication of the signaling signal received from the main body portion by the connecting band at 10:30 a.m. on June 10, 2022 is -62 dbm, so the change value of the signal strength indications of the signaling signals received from the main body portion by the connecting band from 10:00 a.m. on June 10, 2022 to 10:10 a.m. on June 10, 2022 is 3 dbm, the change value of the signal strength indications of the signaling signals received from the main body portion by the connecting band from 10:10 a.m. on June 10, 2022 to 10:20 a.m. on June 10, 2022 is 5 dbm, and the change value of the signal strength indications of the signaling signals received from the main body portion by the connecting band from 10:20 a.m. on June 10, 2022 to 10:30 a.m. on June 10, 2022 is 4 dbm; the change values of the three signal strength indications are averaged to obtain a change value of the signal strength indication of 4 dbm, and since the preset value is 5 dbm, the change value, i.e., 4 dbm, of the signal strength indication received from the main body portion by the connecting band within 30 minutes is less than the preset value of 5 dbm, and accordingly the communication module of the connecting band is closed.

In step S202, it is determined whether the connecting band moves.

The connecting band includes an acceleration sensor, and an acceleration value collected by the acceleration sensor is acquired; when the acceleration value is greater than or equal to a preset acceleration value, it is determined that the connecting band moves; when the acceleration value is less than the preset acceleration value, it is determined that the connecting band does not move. The preset acceleration value may be set according to the actual situation, which is not specifically limited in this embodiment, for example, the preset acceleration value may be set to $0.5^m/_{s^2}$, and whether the connecting band moves may be accurately determined by detecting the acceleration of the connecting band.

In step S203, when the connecting band is determined to move, the communication module of the connecting band is opened at a preset time interval, so that the connecting band communicates with the main body portion at the preset time interval.

Exemplarily, when a user is sleeping and the change value of the signal strength indication of the signaling signal received from the main body portion several times within a period of two hours is less than the preset value, the communication module of the connecting band is closed; when the user wakes up and the acceleration value of the connecting band is detected to be greater than the preset acceleration value, the communication module of the connecting belt is opened at the preset time interval, so that the connecting band communicates with the main body portion at the preset time interval, thereby preventing the connecting band and/or the main body portion from being lost.

In an embodiment, the connecting band is controlled to collect the physical sign data of the user in real time; when the physical sign data is not within a preset physical sign data range, the communication module of the connecting band is opened, and the connecting band transmits the physical sign data to the main body portion through the communication module, so that the main body portion handles an anomaly in the physical sign data according to the physical sign data. The preset physical sign data may be set according to the actual situation, which is not specifically limited in this embodiment. The connecting band collects the physical sign data of the user in real time, and transmits, when the physical sign data is not within the preset physical sign data range, the physical sign data to the main body portion, so that the main body portion further handles the anomaly in the physical sign data, which improves the intelligence of the wearable device.

In an embodiment, the main body portion receives the abnormal physical sign data sent by the connecting band, determines whether the physical condition of the user is abnormal according to the physical sign data, and initiates, when the physical condition of the user is determined to be abnormal, an emergency request via a cellular network, thereby improving the life safety of the user. The emergency request may be set according to the actual situation, which is not specifically limited in this embodiment, for example, the emergency request may be a call to an emergency contact or a call to an emergency center. By determining whether the user really has an emergency, the life safety of the user may be better ensured, and the user experience may also be improved.

In an embodiment, the way of determining, according to the physical sign data, whether the physical condition of the user is abnormal may be as follows: historical physical sign data of the user and standard physical sign data is acquired, the physical sign data of the user is compared with the historical physical sign data and/or the standard physical sign data, and it is determined that the physical condition of the user is abnormal if the physical sign data of the user differs significantly from the historical physical sign data and/or the standard physical sign data. The historical physical sign data is normal physical sign data of the user collected before a current time stamp, and the standard physical sign data is published by the hospital. By comparing the physical sign data of the user with the historical physical sign data and/or the standard physical sign data, the accuracy of the determination of an anomaly in the physical sign data may be improved, and the intelligence of the wearable device is greatly improved.

By means of the wearable device control method in the embodiments described above, when the connecting band is determined to be separated from the main body portion, the signaling signal sent by the main body portion is acquired, and whether the connecting band enters the power saving mode is determined according to the signaling signal; when the connecting band is determined to enter the power saving mode, the communication module of the connecting band is controlled to be opened at the preset time interval, so that the connecting band communicates with the main body portion at the preset time interval. In this embodiment, when the connecting band is determined to enter the power saving mode, the communication module of the connecting band is controlled to be opened at the preset time interval to save the power stored in the connecting band, thereby achieving the purpose of continuously monitoring the physical sign data of the user, and greatly improving the user experience of the wearable device.

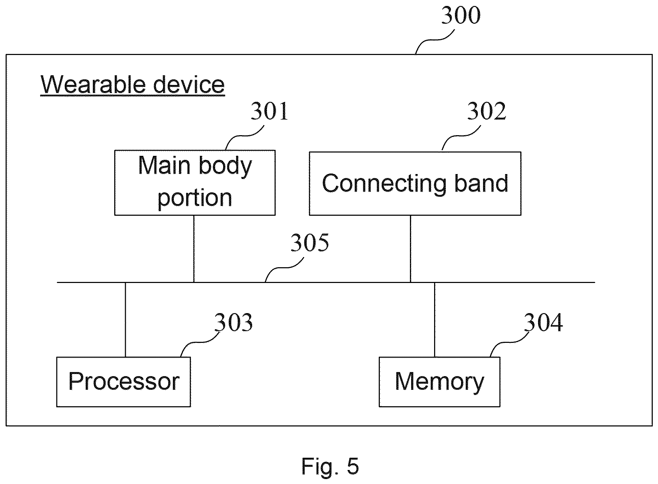

Fig. 5 is a schematic structural block diagram of a wearable device according to an embodiment of the present invention.

As shown in Fig. 5, the wearable device 300 includes a main body portion 301, a connecting band 302, a processor 303, and a memory 304. The main body portion 301, the connecting band 302, the processor 303, and the memory 304 are connected via a bus 305, which is, for example, an inter-integrated circuit (I2C) bus.

Specifically, the processor 303 is configured to provide computing and control capabilities to support the operation of the entire wearable device. The processor 303 may be a central processing unit (CPU), or other general-purpose processors, digital signal processors (DSPs), application specific integrated circuits (ASICs), field-programmable gate arrays (FPGAs) or other programmable logic devices, discrete gate or transistor logic devices, discrete hardware components, and so on. The general processor may be a microprocessor or the processor may also be any conventional processor, etc.

Specifically, the memory 304 may be a Flash chip, a read-only memory (ROM) disk, a compact disc, a USB flash drive, or a removable hard drive.

It may be understood by those skilled in the art that the structure shown in Fig. 5 is only a block diagram of a part of the structure related to the scheme of the present invention and does not constitute a limitation of the wearable device 300 to which the scheme of the present invention is applied. Specifically, the wearable device 300 may include more or less components than shown in the figure, or combine certain components, or have different component arrangements.

The processor 303 is configured to run a computer program stored in the memory and to implement, when executing the computer program, any wearable device control method according to the embodiments of the present invention.

In one implementation, the processor 303 is configured to run a computer program stored in the memory and to implement, when executing the computer program, the following steps:

acquiring, when the connecting band is determined to be separated from the main body portion, a signaling signal sent by the main body portion, and determining, according to the signaling signal, whether the connecting band enters a power saving mode; and

controlling, when the connecting band is determined to enter the power saving mode, a communication module of the connecting band to be opened at a preset time interval, so that the connecting band communicates with the main body portion at the preset time interval.

In an embodiment, the signaling signal includes a signal strength indication of the signaling signal, and when implementing the determining, according to the signaling signal, whether the connecting band enters a power saving mode, the processor 303 is configured to implement:

determining whether the signal strength indication is greater than or equal to a preset signal strength; and

when the signal strength indication is determined to be greater than or equal to the preset signal strength, controlling the connecting band to enter the power saving mode.

In an embodiment, after implementing the controlling, when the connecting band is determined to enter the power saving mode, a communication module of the connecting band to be opened at a preset time interval, so that the connecting band communicates with the main body portion at the preset time interval, the processor 303 is further configured to implement:
acquiring the signaling signal sent by the main body portion at the preset time interval, and if the signal strength indication of the signaling signal is less than the preset signal strength, controlling the connecting band to issue an anti-loss warning.

In an embodiment, after implementing the acquiring the signaling signal sent by the main body portion at the preset time interval, if the signal strength indication of the signaling signal is less than the preset signal strength, the processor 303 is further configured to implement:
controlling the communication module of the connecting band to be continuously opened, so that the communication module of the connecting band continuously searches for the signaling signal sent by the main body portion.

In an embodiment, the processor 303 is further configured to implement:
when the main body portion is determined to be in a charging mode and a change value of the signal strength indication of the signaling signal received from the main body portion within a preset period of time is determined to be less than a preset value, closing the communication module of the connecting band.

In an embodiment, after implementing when the main body portion is determined to be in a charging mode and a change value of the signal strength indication of the signaling signal received from the main body portion within a preset period of time is determined to be less than a preset value, closing the communication module of the connecting band, the processor 303 is further configured to implement:

determining whether the connecting band moves; and

when the connecting band is determined to move, opening the communication module of the connecting band at a preset time interval, so that the connecting band communicates with the main body portion at the preset time interval.

In an embodiment, the connecting band includes an acceleration sensor; and when implementing the determining whether the connecting band moves, the processor 303 is further configured to implement:

acquiring an acceleration value collected by the acceleration sensor;

when the acceleration value is greater than or equal to a preset acceleration value, determining that the connecting band moves; and

when the acceleration value is less than the preset acceleration value, determining that the connecting band does not move.

In an embodiment, the processor 303 is further configured to implement:

controlling the connecting band to collect physical sign data of a user; and

when the physical sign data is not within a preset physical sign data range, opening the communication module of the connecting band, and transmitting, by the connecting band, the physical sign data to the main body portion through the communication module, so that the main body portion handles an anomaly in the physical sign data according to the physical sign data.

It is to be noted that a person skilled in the art to which it belongs can clearly understand that, for the convenience and conciseness of the description, the specific operating process of the wearable device described above can be referred to the corresponding process in the foregoing embodiment of the method for controlling the wearable device, which will not be repeated herein.

The embodiments of the present invention further provide a storage medium for computerreadable storage. And one or more programs are storedin the storage medium, and the one or more programs are configured to cause,when executed by one or more processors, the processor to perform steps of any method for controlling a wearable device as provided in the specification of the present invention.

The storage medium may be an internal storage unit of the wearable device as described in the preceding embodiments, such as a hard disk or memory of the wearable device. The storage medium may also be an external storage device of the wearable device, such as a plug-in hard disk, a smart media card (SMC), a secure digital (SD) card and a Flash card equipped on the wearable device.

It will be understood by a person of ordinary skill in the art that all or some of the steps in the method described above, systems, and functional modules/units in apparatuses may be implemented as software, firmware, hardware, and suitable combinations thereof. In the implementation of hardware, the division of functional modules/units referred to in the above description does not necessarily correspond to a division of physical components, for example, a physical component may have multiple functions, or a function or step may be cooperatively performed by several physical components. Some or all of the physical components may be implemented as software executed by a processor, such as a central processor, a digital signal processor, or a microprocessor, or as hardware, or as integrated circuits, such as application specific integrated circuits. Such software may be distributed on a computer-readable medium, which may include a computer storage medium (or non-transitory medium) and a communication medium (or transitory medium). As is well known to those of ordinary skill in the art, the term "computer storage medium" includes volatile and non-volatile, removable and non-removable media implemented in any method or technique for storing information, such as computer-readable instructions, data structures, program modules, or other data. Computer storage media include, but are not limited to, RAM, ROM, EEPROM, flash memory or other memory technology, CD-ROM, digital versatile disk (DVD) or other optical disk storage, magnetic cartridges, magnetic tapes, magnetic disk storage, or other magnetic storage devices, or any other media that can be used to store desired information and that can be accessed by a computer. In addition, it is well known to those of ordinary skill in the art that communication media typically contain computer-readable instructions, data structures, program modules, or other data in a modulated data signal such as a carrier wave or other transmission mechanism, and may include any information delivery medium.

It is to be understood that the term "and/or" as used in the specification and the appended claims of the present invention refers to and includes any combination and all possible combinations of one or more of the items listed in association. It is to be noted that, as used herein, the terms "including, ""comprising," or any other variations thereof are intended to cover non-exclusive inclusion, such that a process, method, article, or system including a series of elements includes not only those elements but also other elements that are not expressly listed, or that are inherent to such process, method, article or system. Without further limitation, the fact that an element is defined by the phrase "including a ..." does not preclude the existence of another identical element in the process, method, article, or system that includes that element.

The above serial numbers of the embodiments of the present invention are merely for the purpose of description and do not indicate the superiority or inferiority of the embodiments. The above description is merely specific implementation of the present invention, and is not intended to limit the scope of protection of the present invention. All equivalent modifications or substitutions which may be easily conceived by those skilled in the art within the technical scope disclosed by the present invention shall fall within the scope of protection of the present invention. Therefore, the scope of protection of the present invention shall be based on the scope of protection of the claims.

## Claims

1. A method for controlling a wearable device, wherein the wearable device comprises a main body portion and a connecting band, and the method is performed by the connecting band, and comprising:

   acquiring, when the connecting band is determined to be separated from the main body portion, a signaling signal sent by the main body portion, and determining whether the connecting band enters a power saving mode according to the signaling signal; and
   controlling, under the condition of the connecting band is determined to enter the power saving mode, a communication module of the connecting band to be opened at a preset time interval, so that the connecting band communicates with the main body portion at the preset time interval.

2. The method for controlling a wearable device according to claim 1, wherein the signaling signal comprises a signal strength indication of the signaling signal, and the determining whether the connecting band enters a power saving mode according to the signaling signal comprises:

   determining whether the signal strength indication is greater than or equal to a preset signal strength; and
under the condition of the signal strength indication is determined to be greater than or equal to the preset signal strength, controlling the connecting band to enter the power saving mode.

3. The method for controlling a wearable device according to claim 2, wherein after the controlling, under the condition of the connecting band is determined to enter the power saving mode, a communication module of the connecting band to be opened at a preset time interval, so that the connecting band communicates with the main body portion at the preset time interval, the method further comprises: acquiring the signaling signal sent by the main body portion at the preset time interval, and when the signal strength indication of the signaling signal is less than the preset signal strength, controlling the connecting band to issue an anti-loss warning.

4. The method for controlling a wearable device according to claim 3, wherein after the acquiring the signaling signal sent by the main body portion at the preset time interval, under the condition of the signal strength indication of the signaling signal is less than the preset signal strength, the method further comprises: controlling the communication module of the connecting band to be continuously opened, so that the communication module of the connecting band continuously searches for the signaling signal sent by the main body portion.

5. The method for controlling a wearable device according to claim 1, further comprising: when the main body portion is determined to be in a charging mode and a change value of the signal strength indication of the signaling signal received from the main body portion within a preset period of time is determined to be less than a preset value, closing the communication module of the connecting band.

6. The method for controlling a wearable device according to claim 5, wherein after when the main body portion is determined to be in a charging mode and a change value of the signal strength indication of the signaling signal received from the main body portion within a preset period of time is determined to be less than a preset value, closing the communication module of the connecting band, the method further comprises:

   determining whether the connecting band moves; and
   when the connecting band is determined to move, opening the communication module of the connecting band at the preset time interval, so that the connecting band communicates with the main body portion at the preset time interval.

7. The method for controlling a wearable device according to claim 6, wherein the connecting band comprises an acceleration sensor; and determining whether the connecting band moves comprises:

   acquiring an acceleration value collected by the acceleration sensor;
   when the acceleration value is greater than or equal to a preset acceleration value, determining the connecting band moves; and
   when the acceleration value is less than the preset acceleration value, determining the connecting band does not move.

8. The method for controlling a wearable device according to claims 1-7, further comprising:

   controlling the connecting band to collect physical sign data of a user; and
   when the physical sign data is not within a preset physical sign data range, opening the communication module of the connecting band, and transmitting, by the connecting band, the physical sign data to the main body portion through the communication module, so that the main body portion handles an anomaly in the physical sign data according to the physical sign data.

9. A wearable device, comprising a main body portion, a connecting band, a processor, a memory, a computer program stored on the memory and executable by the processor, and a data bus used to realize connection communication between the processor and the memory, wherein the computer program is configured to cause, when executed by the processor, the processor to perform steps of the method for controlling a wearable device as claimed in any one of the claims 1 to 8.

10. A computer-readable storage medium, wherein one or more programs are stored in the storage medium, and the one or more programs are configured to cause, when executed by one or more processors, the processor to perform steps of the method for controlling a wearable device as claimed in any one of the claims 1 to 8.

100

110

120

Fig. 1

100

110

130

120

Fig. 2

S101

when the connecting band is determined to be separated from the main body portion, a signaling signal sent by the main body portion is acquired, and whether the connecting band enters a power saving mode is determined according to the signaling signal

S102

Under the condition of the connecting band is determined to enter the power saving mode, a communication module of the connecting band is controlled to be opened at a preset time interval, so that the connecting band communicates with the main body portion at the preset time interval

Fig. 3

S201

when the main body portion is determined to be in a charging mode and a change value of the signal strength indication of the signaling signal received from the main body portion within a preset period of time is determined to be less than a preset value, the communication module of the connecting band is closed

S202

it is determined whether the connecting band moves

S203

when the connecting band is determined to move, the communication module of the connecting band is opened at a preset time interval, so that the connecting band communicates with the main body portion at the preset time interval

Fig. 4

300

Wearable device

301

Main body portion

302

Connecting band

305

303

Processor

304

Memory

Fig. 5

<div align="center">**INTERNATIONAL SEARCH REPORT**</div>

| International application No. |
| --- |
| **PCT/CN2023/075722** |

**A. CLASSIFICATION OF SUBJECT MATTER**

H04W52/02(2009.01)i;H04M1/73(2006.01)i

According to International Patent Classification (IPC) or to both national classification and IPC

**B. FIELDS SEARCHED**

Minimum documentation searched (classification system followed by classification symbols)

IPC: H04W,H04M

Documentation searched other than minimum documentation to the extent that such documents are included in the fields searched

Electronic data base consulted during the international search (name of data base and, where practicable, search terms used)

CNTXT, CNABS, DWPI, VEN, USTXT, WOTXT, EPTXT, CJFD, CNKI, IEEE: 穿戴, 手环, 手表, 腕表, 表带, 腕带, 连接带, 分离, 拆卸, 取下, 卸下, 拆下, 脱离, 省电, 节能, 降低, 减少, 节约, 节省, 功耗, 耗电, 耗能, 睡眠, 休眠, 时间间隔, 间隔时间, 定时, 定期, 周期, 距离, 信号强度, 丢失, 遗失; wearable, watch, bracelet, band, remove, disengage, disassemable, dismount, teardown, sleep, save, power, energy, distance, lost

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107427224 A (KONINKL PHILIPS NV) 01 December 2017 (2017-12-01) description, paragraphs [0043]-[0124], and figures 1A-10 | 1-10 |
| Y | CN 110037399 A (CHUMEN WENWEN INFORMATION TECHNOLOGY CO., LTD.) 23 July 2019 (2019-07-23) description, paragraphs [0046]-[0177], and figures 1-11 | 1-10 |
| Y | CN 111243245 A (GUANGDONG GENIUS TECHNOLOGY CO., LTD.) 05 June 2020 (2020-06-05) description, paragraphs [0040]-[0094], and figures 1-5 | 3-4 |
| A | CN 106725372 A (NINGBO YINUOWEI INFORMATION TECHNOLOGY CO., LTD.) 31 May 2017 (2017-05-31) entire document | 1-10 |
| A | KR 20160048618 A (AVA ENTERTAINMENT CO., LTD.) 04 May 2016 (2016-05-04) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 February 2023** | **15 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/075722**

| Patent document cited in search report | | | Publication date (day/month/year) | Patent family member(s) | | | Publication date (day/month/year) |
|---|---|---|---|---|---|---|---|
| CN | 107427224 | A | 01 December 2017 | JP | 2018513716 | A | 31 May 2018 |
| | | | | US | 2018070840 | A1 | 15 March 2018 |
| | | | | EP | 3270769 | A1 | 24 January 2018 |
| | | | | WO | 2016146652 | A1 | 22 September 2016 |
| CN | 110037399 | A | 23 July 2019 | CN | 209862527 | U | 31 December 2019 |
| | | | | CN | 110037399 | B | 13 April 2021 |
| CN | 111243245 | A | 05 June 2020 | None | | | |
| CN | 106725372 | A | 31 May 2017 | None | | | |
| KR | 20160048618 | A | 04 May 2016 | KR | 101646541 | B1 | 08 August 2016 |

Form PCT/ISA/210 (patent family annex) (July 2022)